Europäisches Patentamt

European Patent Office

Office européen des brevets

(11) Publication number: **0 070 193**
**B1**

# EUROPEAN PATENT SPECIFICATION

(45) Date of publication of patent specification: **23.04.86**

(51) Int. Cl.⁴: **G 21 F 7/02**

(21) Application number: **82303678.5**

(22) Date of filing: **13.07.82**

(54) Apparatus for eliminating irradiation - induced reduction in light transmittance of a transparent glass.

(30) Priority: **13.07.81 JP 109054/81**

(43) Date of publication of application:
**19.01.83 Bulletin 83/03**

(45) Publication of the grant of the patent:
**23.04.86 Bulletin 86/17**

(84) Designated Contracting States:
**DE FR GB**

(56) References cited:
**EP-A-0 058 574**
**AU-A- 48 648**
**LU-A- 39 088**
**US-A-4 157 253**

**NUCLEAR ENGINEERING, August 1957, pages 315-320 F.S. BLOXAM: "Remote viewing".**

(73) Proprietor: **Fuji Photo Optical Co., Ltd.**
**1-324 Uetake-machi Omiya-shi**
**Saitama-ken (JP)**

(72) Inventor: **Harada, Yuho**
**1-324, Uetake-machi**
**Omiya-shi Saitama-ken (JP)**
Inventor: **Kuwayama, Shigeo**
**1-324, Uetake-machi**
**Omiya-shi Saitama-ken (JP)**

(74) Representative: **Ayers, Martyn Lewis Stanley et al**
**J.A. KEMP & CO. 14 South Square Gray's Inn London, WC1R 5EU (GB)**

Courier Press, Leamington Spa, England.

## Description

The present invention relates to apparatus for restoring the light transmittance of a glass, such as a window glass through which radiation apparatus are observed, an optical lens of T.V. camera for monitoring radiation apparatus, or an irradiation shielding glass disposed in front of the TV camera, which transmittance has been reduced by X-ray or γ-ray irradiation-induced discoloration.

A serious problem encountered in the atomic energy field where nuclear test plants available for nuclear development activities or atomic power generators are used or in the radiotherapy field is that the human body must be protected from being exposed to X-ray or γ-ray irradiation which has injurious effects on the human body. Therefore, whenever using an irradiation source, it is conventional that, in order to contain the irradiation source in a compartment, a partition wall of the compartment is provided with a transparent window glass which can sufficiently shield X-ray or γ-ray irradiation, or a CRT is installed on which the inside of the compartment is displayed through a monitor TV camera in the compartment.

Generally, the exposure of glass to X-ray or γ-ray irradiation induces discoloration due to so-called color center, becoming colored yellowish brown. In particular, lead glass which is suitable to shield irradiation shows a distinct tendency to become discolored.

For the purpose of overcoming the disadvantage that the exposure of glass to X-ray or γ-ray irradiation causes discoloration, it is well known to those skilled in the art to mix a small quantity of cerium dioxide in the composition of the glass for preventing its discoloration. However, since a cerium-dioxide-containing glass tends to absorb visible radiation having wavelengths close to that of ultraviolet radiation, a considerable reduction in light transmittance of the cerium-dioxide-containing glass is induced. For example, glass consisting of 44.3 wt.% silicon dioxide ($SiO_2$), 45.7 wt.% lead oxide (PbO), 4.4 wt.% potassium oxide ($K_2O$), 5.0 wt.% sodium oxide ($Na_2O$), 0.2 wt.% aluminium oxide ($Al_2O_3$), and 0.3 wt.% arsenic oxide ($As_2O_3$) shows, when containing 0.2% by weight of cerium dioxide ($CeO_2$), about a 17% reduction in spectral transmittance of light of 400 nm wavelength after passing through 200 mm of optical path through the glass.

In order to prevent an observation window glass from becoming discolored, it is usual to provide a lead shutter in front of or around the irradiation source which is adapted to open only in case of necessity so as to minimize the exposure of the window glass to irradiation. However, this has the disadvantage that the lead shutter has to be thick to satisfactorily prevent the window glass from becoming discolored.

Where a monitor TV camera is used, it is proposed for the purpose of preventing lens elements of the camera from becoming discolored either to provide irradiation shield glass plate in front of or around the irradiation source, or to use lens elements made of cerium-dioxide-containing glasses. Notwithstanding the considerations above, the frequent exposure of the glasses to X-ray or γ-ray irradiation induces a reduction in light transmittance thereof over a long period of time, and thus causes the window glass, the glass plate, and the lens elements to be unusable.

It is known, e.g. from the article by F. S. Bloxam in the August 1957 issue of Nuclear Engineering pp. 315—320 that the light transmittance of glass can be restored by subjecting the glass to intense visible or ultra-violet light. This discloses apparatus in accordance with the precharacterising portion of claim 1.

A practical application of this has been suggested in our copending EPC Application, EP—A3—0058574, where it is proposed to restore the light transmittance of a fibre-optic endoscope by directing light radiation through it from end to end. This prior Application discloses an apparatus for restoring the light transmittance of a transparent glass which comprises a light source for transmitting visible light radiation to be directed through the fibre bundle to restore the transmittance thereof and reflection means disposed behind the light source for reflecting the visible light radiation from the light source towards the glass. The light source and reflection means are in the form of a fitting which is connected by means of an adaptor to one end of the fibre-optic bundle. Thus in this prior proposal, the light is directed through the glass in the same direction through which viewing light normally passes. The difficulty with such an arrangement is that it is not convenient to use where, for example, the glass in question is an observation window or TV camera lens or the like and furthermore does not permit the light restoring apparatus to remain in situ during normal viewing use.

An object of the present invention, therefore, is to provide an apparatus for restoring the light transmittance of a transparent glass which is useful where the glass is a viewing window, shield plate or TV camera lens.

According to the present invention there is provided an apparatus for restoring the light transmittance of a transparent glass which is so positioned as to be exposed to X-ray or γ-ray irradiation and whose transmittance has been reduced by discoloration as a result of irradiation, said apparatus comprising:

a light source for emitting visible light radiation to be directed through the glass to restore the transmittance thereof, characterised in that at least one light source and reflection means disposed behind said light source are arranged laterally with respect to the normal viewing direction through the glass, and that the light source and the reflection means are arranged to direct said visible light into said glass via an edge surface thereof.

Using a light source for emitting visible light radiation, the higher the visible light radiation density is, the greater is the recovery of the light transmittance in rate. Moreover, short wavelength visible light is significantly more effective in restoring the light transmittance. A halogen lamp, a xenon lamp or the like can be used as the light source. The apparatus according to the present invention can be so modified that a glass is exposed to visible light radiation while it is just exposed to X-ray or γ-ray irradiation so as to be kept from becoming discolored.

Other features and advantages of the present invention will become apparent from the detailed description, taken in conjunction with the accompanying drawings in which like parts are designated by like reference numerals.

Figure 1 is a diagrammatic view showing a light source arrangement wherein a plurality of light sources are disposed around the observation window of a chamber;

Figure 2 is a diagrammatic top view showing the light source arrangement shown in Fig. 1; and

Figure 3 is a schematic illustration showing a light source arrangement wherein a plurality of light sources for emitting visible light radiation are disposed adjacent and along opposed lateral surfaces of a glass plate provided in front of a monitor TV camera to prevent the lens from being exposed to X-ray or γ-ray irradiation.

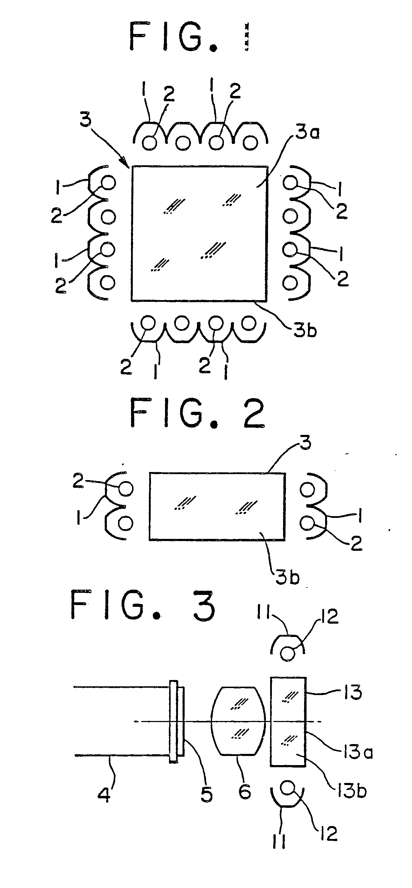

In Figs. 1 and 2, set in an irradiation shielding wall forming a part of a chamber (not shown) accommodating an X-ray or γ-ray irradiation source therein or in a partition wall disposed around an X-ray or γ-ray irradiation source is an irradiation shield glass 3 through which observations are made (the irradiation shielding wall is omitted in Figs. 1 and 2 to simplify the illustration). Arranged around the window glass 3 are a plurality of light sources 2 which emit visible light radiation, which radiation enters into the window glass 3 through the lateral surfaces 3b thereof, partially directly and partially after reflection by mirrors 1 incorporated with the respective light source 2. As seen in Fig. 2, the light sources 2 are arranged in double lines. The window glass 3 is set in a wall of shielding material such as concrete. A lead glass containing, for instance, 40% by weight of lead oxide is often used as the window glass 3. Depending on the densities of X-ray or γ-ray irradiation, it may be preferable to set a plurality of window glasses one over another. When using a window glass consisting of 44.3% of silicon dioxide ($SiO_2$), 45.7% of lead oxide (PbO), 4.4 wt.% of potassium oxide ($K_2O$), 5.0 wt.% of sodium oxide ($Na_2O$), 0.2 wt.% aluminium oxide ($Al_2O_3$), and 0.3 wt.% of arsenic oxide ($As_2O_3$), a window glass having a size of 200×200×100 mm shows a reduction in spectral transmittance at the wavelength of 400 nm of 66.5% to 54.8% after exposure thereof to a total irradiation of 600 Roentgens (R) by an X-ray tube operating at 85 kvp.

The window glass 3 whose spectral transmittance at 400 nm wavelength has been reduced to 54.8% is exposed through its lateral surfaces 3b to visible light radiation emitted from a large number of light sources 2, for instance 32 lamps, after reflection by the respective mirrors 1, with the result that a spectral transmittance approaching that of the original is regained in about ten hours. Although halogen lamps having a power of 150 W are used in this embodiment, various kinds of lamps can be selectively used. For example, xenon lamps which can emit comparatively a large quantity of visible light radiation at wavelengths shorter than about 580 nm will have a preferable effect causing the window glass to recover its transmittance. It has been confirmed experimentally with a window glass with a small quantity of cerium oxide ($CeO_2$) that the recovery of light transmittance is almost the same in rate as that described for the window glass considered in this embodiment.

Various light source arrangements can be made within the scope of the present invention. For example, light sources with the respective reflecting mirrors incorporated therewith may be disposed in a linear or in double lines either around four lateral surfaces or along at least one of them. Where a large number of visible light sources are used, there is the risk that the window glass 3 will be caused by the raised temperature to be colored yellow and thus to decrease its light transmittance. To prevent this, the reflection mirrors 1 can be replaced with cold mirrors which permit infrared rays to pass therethrough, but reflect visible light, or infrared reflection filters can be placed between the light sources 3 and reflection mirrors 1. It may also be desirable to allow cooling water to flow through a space formed between two window glasses 3 and an additional plate glass. Cooling water can be replaced by a solution of thallium formate which in itself shows an irradiation shielding effect. The exposure of the window glass to visible light radiation will be improved by coating the lateral surfaces with an anti-reflection layer. It is possible to expose the window glass 3 to visible light radiation through the front surface 3a in place of the lateral surface 3b, which leads to the same effect as described for the latter, except that visibility through the window glass is reduced during the visible light irradiation. A window glass 3 with a curved surface or cylindrical surface shows the same effect as described for a window glass 3 with plane surfaces.

Fig. 3 shows another embodiment wherein a visible light radiation source is built into a monitor TV camera, and provided opposite to the taking lens 6 which forms an image on a face plate 5 of a camera tube 4, is an irradiation shield glass plate 13 which is exposed through its lateral surface 13b to visible light radiation from visible light sources 12 with mirrors 11 incorporated. In conventional monitor TV cameras, while the outermost lens may be made of a cerium-oxide containing glass in order to reduce the rate at which it goes yellow, the lens eventually goes yellow anyway, with prolonged exposure of it to powerful X-ray or γ-ray irradiation and thus becomes unusable.

The monitor TV camera shown in Fig. 3 can enable a clear image of the object to be observed on such a display screen as a CRT since the glass plate 13 in itself, which is exposed to visible light radiation, is prevented from becoming discolored while it serves to shield the lens from becoming discolored. It is desirable to make the glass plate 3 of a lead glass containing 40% by weight of lead oxide (PbO). Protection of the lens elements and the camera tube from X-ray or γ-ray irradiation may be by application of such materials as lead around them.

Although eight 150 W halogen lamps are used in the embodiment shown in Fig. 3, various kinds and various kinds and various numbers of lamps may be employed. When a large number of lamps are used, it is desirable, for preventing the glass plate 3 from overheating to replace the reflection mirrors 11 with cold mirrors which permit infrared rays to pass therethrough, but reflect visible rays, in much the same way as described for the embodiment shown in Figs. 1 and 2. Further, the glass plate may be exposed through its front surface 13a to visible radiation from a visible light source. In the case last mentioned, however, the irradiation with visible light should be discontinued to avoid unclear images being produced.

## Claims

1. An apparatus for restoring the light transmittance of a transparent glass (3, 6, 13) which is so positioned as to be exposed to X-ray or γ-ray irradiation and whose transmittance has been reduced by discoloration as a result of irradiation, said apparatus comprising:
a light source (2, 12) for emitting visible light radiation to be directed through the glass (3, 6, 13) to restore the transmittance thereof, characterised in that at least one light source (2, 12) and reflection means (1, 11) disposed behind said light source are arranged laterally with respect to the normal viewing direction through the glass (3, 6, 13), and that the light source (2, 12) and the reflection means (1, 11) are arranged to direct said visible light into said glass via an edge surface (3b, 13b) thereof.

2. An apparatus as defined in claim 1, wherein said light source is a halogen lamp.

3. An apparatus as defined in claim 1, wherein said light source is a xenon lamp.

4. An apparatus as defined in claim 1, 2 or 3, wherein said reflection means (1, 11) is a cold mirror which allows infra-red rays to pass therethrough and to reflect visible rays.

5. An apparatus as defined in any one of the preceding claims, wherein said transparent glass is set in an irradiation shielding partition.

6. An apparatus as defined in any one of the preceding claims, wherein said glass is a glass plate.

7. An apparatus according to any one of claims 1—4, wherein the glass is a transparent plate glass for shielding irradiation provided on a monitor TV camera (4).

8. An apparatus as defined in any one of the preceding claims, wherein a plurality of said visible light sources are arranged along at least one lateral minor surfaces of the glass.

9. An apparatus as defined in claim 8, wherein a plurality of said visible light sources along said at least one lateral surface are arranged in a double line.

## Patentansprüche

1. Gerät zur Wiederherstellung der Lichtdurchlässigkeit eines transparenten Glases (3, 6, 13), das so angeordnet ist, daß es einer Röntgen- oder Gamma-Bestrahlung ausgesetzt ist, und dessen Durchlässigkeit durch Verfärbung infolge Bestrahlung reduziert worden ist, mit einer Lichtquelle (2, 12) zur Emission einer sichtbaren Lichtstrahlung, die zur Wiederherstellung der Durchlässigkeit durch das Glas (3, 6, 13) gerichtet wird, dadurch gekennzeichnet, daß mindestens eine Lichtquelle (2, 12) und eine Reflektoreinrichtung (1, 11), die hinter der Lichtquelle angeordnet ist, in Bezug zur normalen Blickrichtung durch das Glas (3, 6, 13) seitlich angeordnet sind, und daß die Lichtquelle (2, 12) und die Reflektoreinrichtung (1, 11) derart angeordnet sind, daß das sichtbare Licht über eine Kantenfläche (3b, 13b) in das Glas gerichtet wird.

2. Gerät nach Anspruch 1, dadurch gekennzeichnet, daß die Lichtquelle eine Halogenlampe ist.

3. Gerät nach Anspruch 1, dadurch gekennzeichnet, daß die Lichtquelle eine Xenonlampe ist.

4. Gerät nach Anspruch 1, 2 oder 3, dadurch gekennzeichnet, daß die Reflektoreinrichtung (1, 11) ein kalter Spiegel ist, der für Infrarotstrahlen durchlässig ist und der sichtbare Strahlen reflektiert.

5. Gerät nach einem der vorhergehenden Ansprüche, dadurch gekennzeichnet, daß das transparente Glas in eine die Strahlung abschirmende Wand eingesetzt ist.

6. Gerät nach einem der vorhergehenden Ansprüche, dadurch gekennzeichnet, daß das Glas eine Glasplatte ist.

7. Gerät nach einem der Ansprüche 1 bis 4, dadurch gekennzeichnet, daß das Glas eine transparente Glasplatte zur Abschirmung einer von einer TV-Aufzeichnungskamera (4) gelieferten Strahlung ist.

8. Gerät nach einem der vorhergehenden Ansprüche, dadurch gekennzeichnet, daß eine Vielzahl von Lichtquellen für sichtbares Licht entlang mindestens einer der seitlichen Spiegeloberflächen des Glases angeordnet sind.

9. Gerät nach Anspruch 8, dadurch gekennzeichnet, daß eine Vielzahl von Lichtquellen für sichtbares Licht entlang der mindestens einen seitlichen Oberfläche in einer Doppelreihe angeordnet sind.

**Revendications**

1. Appareil pour rétablir la transmittance d'un verre transparent (3, 6, 13) exposé à des rayons X ou des rayons gamma et dont la transmittance a été réduite par une décoloration résultant de l'irradiation, ledit appareil comprenant une source de lumière (2, 12) servant à émettre un rayonnement lumineux visible dirigé de façon à traverser le verre (3, 6, 13) pour rétablir la transmittance de celui-ci, caractérisé en ce qu'au moins une source de lumière (2, 12) et un moyen de réflexion (1, 11) disposé derrière ladite source de lumière sont disposés latéralement par rapport à la direction d'observation normale à travers le verre (3, 6, 13), et que la source de lumière (2, 12) et le moyen de réflexion (1, 11) sont disposés de telle façon que ladite lumière visible soit dirigée de façon à traverse le verre en passant par une surface latérale (3b, 13b) de celui-ci.

2. Appareil selon la revendication 1, caractérisé en ce que la source de lumière (2, 12) est une lampe aux halogènes.

3. Appareil selon la revendication 1, caractérisé en ce que la source de lumière (2, 12) est une lampe au xénon.

4. Appareil selon l'une des revendications précédentes, caractérisé en ce que le moyen de réflexion (1, 11) est un miroir froid qui laisse passer les rayons infrarouges tout en réfléchissant la lumière visible.

5. Appareil selon l'une des revendications précédentes, caractérisé en ce que le verre transparent (3, 6, 13) est monté dans une paroi de protection contre les rayonnements ionisants.

6. Appareil selon l'une des revendications précédentes, caractérisé en ce que le verre transparent (3, 6, 13) est une plaque de verre.

7. Appareil selon l'une des revendications 1 à 4, caractérisé en ce que le verre transparent est une plaque de verre transparent (13) utilisée comme écran contre les rayonnements ionisants devant une caméra de télévision de surveillance (4).

8. Appareil selon l'une des revendications précédentes, caractérisé en ce qu'un certain nombre de sources de lumière (2, 12) sont disposées le long au moins d'une surface latérale mineure du verre.

9. Appareil selon la revendication 8, caractérisé en ce qu'un certain nombre desdites sources de lumière disposées le long d'au moins une desdites surfaces latérales sont disposées sur deux rangées.

# FIG. 1

# FIG. 2

# FIG. 3